# EUROPEAN PATENT APPLICATION

(11) **EP 4 621 079 A1**
(43) Date of publication of application: **24.09.2025**
(21) Application number: 22965675.6
(22) Date of filing: 28.12.2022
(51) Int. Cl.: C21D 8/02, C23C 2/06, C22C 33/04, C22C 38/02, B21B 1/02, C22C 38/04, C23C 2/40, C22C 38/06

(54) **HIGH-STRENGTH STEEL, ZINC-ALUMINUM-MAGNESIUM COATED STEEL, AUTOMOBILE PART AND PREPARATION METHOD**

(30) Priority: 17.11.2022 CN 202211442850
(71) Applicant: Shougang Jingtang Iron & Steel Co., Ltd., Tangshan, Hebei 063200 (CN); Shougang Group Co., Ltd., Beijing 100041 (CN)
(72) Inventor: ZHOU, Jian, Tangshan, Hebei 063200 (CN); TENG, Huaxiang, Tangshan, Hebei 063200 (CN); ZOU, Ying, Tangshan, Hebei 063200 (CN); ZHU, Guosen, Tangshan, Hebei 063200 (CN); LIU, Huasai, Tangshan, Hebei 063200 (CN); HAN, Yun, Tangshan, Hebei 063200 (CN); XU, Haiwei, Tangshan, Hebei 063200 (CN); ZHOU, Huan, Tangshan, Hebei 063200 (CN); JIANG, Guangrui, Tangshan, Hebei 063200 (CN); ZHOU, Jiming, Tangshan, Hebei 063200 (CN); LIU, Wuhua, Tangshan, Hebei 063200 (CN); ZHANG, Yongqiang, Tangshan, Hebei 063200 (CN); ZHENG, Yankun, Tangshan, Hebei 063200 (CN); WANG, Baoyong, Tangshan, Hebei 063200 (CN); WANG, Chaobin, Tangshan, Hebei 063200 (CN); GUO, Zifeng, Tangshan, Hebei 063200 (CN); WANG, Songtao, Tangshan, Hebei 063200 (CN); QIU, Musheng, Tangshan, Hebei 063200 (CN); YANG, Feng, Tangshan, Hebei 063200 (CN)
(74) Representative: Valet Patent Services Limited
(86) International application number: PCT/CN2022/142927
(87) International publication number: WO 2024/103499

(57) **Abstract**

A high-strength steel, a zinc-aluminum-magnesium coated steel, and a method for preparing them, and an automobile part are provided according to an embodiment of the invention. The invention belongs to the technical field of manufacturing high-corrosion-resistant high-strength steel for automobile chassis. Chemical compositions of the high-strength steel include: C, Si, Mn, Al and Fe. A content of Si ranges from 0.05 wt% to 0.1 wt%, and a content of Al ranges from 0.01 wt% to 0.60 wt%; a microstructure of the high-strength steel includes at least one of: the ferrite of 50 area% to 80 area%, and the bainite of 10 area% to 50 area%. The present invention solves the technical problems of insufficient corrosion resistance of existing high-strength steel leading to premature failure and poor lightweight effect.

## Description

### CROSS-REFERENCE TO RELATED APPLICATION

This application claims priority to Chinese patent application No. 2022114428508, filed on November 17, 2022, and entitled "High-strength steel, zinc-aluminum-magnesium coated steel, automobile part and preparation methods therefor", the entire contents of which are incorporated herein by reference.

### TECHNICAL FIELD

The invention relates to the technical field of steelmaking, and in particular to a high-strength steel, zinc-aluminum-magnesium coated steel, automobile part and preparation methods therefor.

### BACKGROUND

An automobile chassis, accounting for nearly a quarter of the weight of automobile, is an important component system of the entire automobile and has become an important breakthrough in carbon emission reduction. At present, a high-strength steel mainly includes a low-alloy high-strength steel of 300 to 700 Mpa grade and a dual-phase steel below 600 Mpa grade. Ultra-high-strength steels of 780 Mpa grade and above 780 Mpa grade is relatively rarely applied. There is an urgent need to upgrade a strength to improve a lightweight level of a chassis system.

A microstructure of the high-strength steel includes at least one of the following: a ferrite of 50 area% to 80 area%, and a bainite of 10 area% to 50 area%.

### SUMMARY

A high-strength steel, a zinc-aluminum-magnesium coated steel, and methods for preparing them, and an automobile part are provided according to an embodiment of the invention, which solves the technical problem of poor lightweight of existing high-strength steels.

In a first aspect of the invention, a high-strength steel is provided, chemical compositions of the high-strength steel include: C, Si, Mn, Al and Fe. A content of Si ranges from 0.05 wt% to 0.1 wt%, and a content of Al ranges from 0.01 wt% to 0.60wt%; a microstructure of the high-strength steel includes at least one of: a ferrite of 50 area% to 80 area%, and a bainite of 10 area% to 50 area%.

In a second aspect of the invention, a method for preparing the high-strength steel is provided, which is used to prepare the high-strength steel of the first aspect, including: heating a slab containing the chemical compositions; hot rolling the slab heated, and then cooling and coiling the slab to obtain a hot-rolled coil; performing a second cooling and then a pickling on the hot-rolled coil to obtain a high-strength steel.

In a third aspect of the invention, a zinc-aluminum-magnesium coated steel is provided, including a steel matrix, and a zinc-aluminum-magnesium coating attached to at least a portion of a surface of the steel matrix; the steel matrix is the high-strength steel described in the first aspect.

In a fourth aspect of the invention, a method for preparing a zinc-aluminum-magnesium coated steel is provided, which is used to prepare the zinc-aluminum-magnesium coated steel of the third aspect, including: preheating the steel matrix to make the steel matrix to have a third set temperature; heating the steel matrix with the third set temperature under a condition of a set heating rate to make the steel matrix to have a fourth set temperature, and performing a soaking heat preservation on the steel matrix under conditions of the fourth set temperature and a second set time; cooling the steel matrix after the soaking heat preservation under a condition of a third set cooling rate to make the steel matrix to have a fifth set temperature; performing a hot-dip on the steel matrix with the fifth set temperature using a zinc-magnesium-aluminum plating solution, and then cooling the steel matrix to obtain the zinc-aluminum-magnesium coated steel.

In a fifth aspect of the invention, an automobile part is provided, wherein at least some structural members in the automobile part are made of the zinc-aluminum-magnesium coated steel according to the third aspect.

### BRIEF DESCRIPTION OF DRAWINGS

FIG. 1 shows a typical microstructure diagram of a high-strength steel according to some embodiments of the invention.
FIG. 2 shows a schematic flow chart of a method for preparing a high-strength steel according to some embodiments of the invention.

### DETAILED DESCRIPTION

In order to make the purposes, technical solutions and advantages of the embodiments of the invention clearer, the technical solutions in the embodiments of the invention will be clearly and completely described below in conjunction with the accompanying drawings in the embodiments of the invention. Obviously, the described embodiments are only a portion of embodiments of the invention, not all the embodiments. Based on the embodiments in the invention, all other embodiments obtained by those skilled in the art without any creative efforts fall within the scope of protection sought by the invention.

Various embodiments of the invention may exist in the form of a range; it should be understood that the description in the form of a range is only for convenience and simplicity and should not be understood as a hard limit to the scope of the invention; therefore, the described range should be considered to have specifically disclosed all possible subranges as well as the single values within such a range. For example, a description of a range from 1 to 6 should be considered to have specifically disclosed subranges, such as from 1 to 3, from 1 to 4, from 1 to 5, from 2 to 4, from 2 to 6, and from 3 to 6, and a single number within the stated range, such as 1, 2, 3, 4, 5, and 6, which applies regardless of the range. Additionally, whenever a numerical range is indicated herein, it is intended to include any cited number (fractional or whole) within the indicated range. Unless otherwise specified, various raw materials, reagents, instruments and apparatuses used in the invention can be purchased from the market or prepared by existing methods.

In the invention, unless otherwise specified, directional words such as "upper" and "lower" used to refer specifically to the directions of the drawings in the accompanying drawings. Additionally, in the description of the invention, the terms "including", "comprising" and the like indicate "including but not limited to". In the invention, relational terms such as "first" and "second" and the like are merely used to distinguish one entity or operation from another entity or operation, but do not necessarily require or imply any such actual relationship or order between these entities or operations. In the invention, "and/or" describes the relationship between associated objects, indicating that there may be three relationships. For example, A and/or B may refer to: A alone, both A and B, and B alone. A and B can be singular or plural. In this invention, "at least one" means one or more, and "plurality" means two or more. "At least one", "at least one of the following" or similar expressions thereof refer to any combination of these items, including single items or any combination of plural items. For example, "at least one of a, b, or c", or "at least one of a, b, and c" can mean: a, b, c, a~b (that is, a and b), a~c, b~c, or a~b- c, where a, b, and c can each be single or multiple.

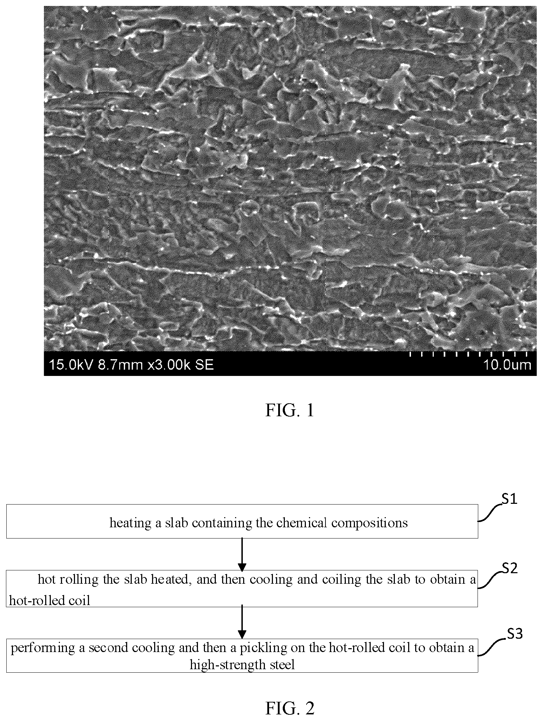

In a first aspect, as shown in FIG. 1, a high-strength steel is provided. Chemical compositions of the high-strength steel include: C, Si, Mn, Al and Fe. A content of Si ranges from 0.05 wt% to 0.1 wt%, and a content of Al ranges from 0.01 wt% to 0.60 wt%. A microstructure of the high-strength steel includes at least one of: a ferrite 50 area% to 80 area%, and a bainite 10 area% to 50 area%.

Through a reasonable design of each chemical composition, a content of Si and a content of Al in the high-strength steel are ameliorated and controlled, and the content of Si and content of Al are limited to range from 0.05wt% to 0.1wt% and 0.01wt% to 0.60wt%, respectively. The content of Si being appropriately reduced and the content of Al being increased are advantageous to a formation of ferrite in a microstructure of high-strength steel. Contents of a ferrite and a bainite being controlled appropriately makes the high-strength steel to have both high tensile strength and high hole expansion performance, that is, a tensile strength of a steel plate is greatly improved while a good local formability is ensured. Under the premise of ensuring a strength and safety performance of an automobile, a curb weight of the automobile can be reduced as much as possible, thereby improving a power performance of the automobile, reducing fuel consumption, and reducing exhaust pollution. Thus, a lightweight effect of high-strength steel can be significantly improved.

Si can be solid dissolved into the ferrite, increasing a strength of a ferrite matrix and reducing a hardness difference between the ferrite and the bainite, to be advantageous to improving a hole expansion performance. However, Si can easily cause an iron oxide scale to be formed on a surface of a hot-rolled coil, and in tum a quality of a galvanized surface is affected, resulting in defects such as skip plating and color difference. Therefore, an upper limit of the content of Si is set as 0.1%. The content of Si may be 0.05 wt%, 0.06 wt%, 0.07 wt%, 0.08 wt%, 0.09 wt%, 0.1 wt%, etc..

Al, similar to Si, and Si are both elements that promote a formation of the ferrite. In an embodiment of the invention, the content of Si is appropriately reduced and the content of Al is appropriately increased. On the one hand, it can reduce a poor surface quality of the galvanized surface caused due to a high content of Si. On the other hand, it can promote the formation of the ferrite within a limited time in an air cooling stage after rolled, and control contents of the ferrite, bainite and other structures within a reasonable range to obtain a balance between the tensile strength and local formability. At the same time, in order to avoid excessive addition of Al causing a decrease in a strength of a steel plate, an upper limit of the content of Al is set as 0.60%. The content of Al may be 0.01 wt%, 0.05 wt%, 0.08 wt%, 0.10 wt%, 0.12 wt%, 0.15 wt%, 0.18 wt%, 0.20 wt%, 0.22 wt%, 0.25 wt%, 0.28 wt%, 0.30 wt%, 0.33 wt%, 0.35 wt%, 0.38 wt%, 0.40 wt%, 0.42 wt%, 0.45 wt%, 0.48 wt%, 0.50 wt%, 0.55 wt%, 0.60 wt%, etc..

In terms of area fraction, a content of the ferrite in the microstructure of the high-strength steel may be 50%, 51%, 52%, 53%, 54%, 56%, 57%, 58%, 59%, 60%, 61%, 62%, 62%, 63%, 64%, 65%, 66%, 67%, 68%, 69%, 70%, 71%, 72%, 73%, 74%, 75%, 76%, 78%, 79%, 80%, etc.. In terms of area fraction, a content of the bainite in the microstructure of the high-strength steel may be 10%, 12%, 14%, 16%, 18%, 20%, 22%, 24%, 26%, 28%, 30%, 32%, 34%, 36%, 38%, 40%, 42%, 44%, 46%, 48%, 50%, etc..

In an advanced high-strength steel, the ferrite is a soft phase, which has the characteristics of low strength, low hardness and variable deformability, and is an important component phase to ensure plasticity. When a proportion of the ferrite is lower than 50%, an elongation after fracture cannot be guaranteed to be ≥23%; when the proportion of the ferrite exceeds 80%, proportions of hard phases such as the bainite are low, and thus it is difficult to ensure a tensile strength of more than 780 MPa. The high-strength steel according to an embodiment of the invention preferably uses the bainite as a main hard phase structure. A strength and hardness of the bainite, compared with a martensite, are lower. A hardness difference between the bainite and the ferrite is relatively small, and it is advantageous to improving the hole expansion performance of the high-strength steel according to an embodiment of the invention. When a proportion of the bainite is less than 10%, the tensile strength of more than 780 MPa cannot be guaranteed; when a proportion of the bainite is greater than 50%, the elongation after fracture of more than 23% is difficult to be obtained.

In some embodiments, in the chemical compositions of the high-strength steel, a content of C ranges from 0.04 wt% to 0.15 wt%, and a content of Mn ranges from 1.2 wt% to 1.9 wt%.

C is an interstitial solid solution atom, which can significantly improve a hardness and strength of a matrix structure, and is advantageous to improving the tensile strength; C can also improve a stability of an austenite and promote a formation of hard phase structures such as a bainite. In addition, C is also an essential element for forming microalloy carbides such as Nb, V, and Ti. In order to obtain a tensile strength of not less than 780 MPa, a content of C shall not be less than 0.04%. At the same time, in order to take into account both welding and formability, an upper limit of the content of C shall not exceed 0.15%. In some embodiments, a content of element C may be 0.04 wt%, 0.05 wt%, 0.06 wt%, 0.07 wt%, 0.08 wt%, 0.09 wt%, 0.10 wt%, 0.11 wt%, 0.12 wt%, 0.13 wt%, 0.14 wt%, 0.15 wt%, etc..

Mn has a strong effect of solid solution strengthening and is an important element for improving the tensile strength. In order to obtain a tensile strength of more than 780 MPa, a content of Mn must not be less than 1.2%. However, when the content of Mn exceeds 1.9%, the elongation after fracture and hole expansion rate decrease significantly, and thus an upper limit of the content of Mn is set to be 1.9%. In some embodiments, a content of Mn element may be 1.2 wt%, 1.3 wt%, 1.4 wt%, 1.5 wt%, 1.6 wt%, 1.7 wt%, 1.8 wt%, 1.9 wt%, etc..

P tends to segregate at grain boundaries and deteriorate plasticity and formability, and thus a content of P cannot exceed 0.01%. In some embodiments, the content of P may be 0.005 wt%, 0.006 wt%, etc., or P is not contained, or the content of P is lower than a minimum detection limit of the existing detection method.

S is a harmful impurity element and is easily combined with Mn to form coarse MnS inclusions, resulting in deteriorated formabilities such as the hole expansion and flanging of a steel plate. Therefore, an upper limit of a content of S is set to be 0.001%. In some embodiments, the content of S may be 0.00005 wt%, 0.00006 wt%, etc., or S is not contained, or the content of S is lower than a minimum detection limit of the existing detection method.

In some embodiments, the chemical compositions of the high-strength steel further include at least one of the following: Cr, Mo, Cu, Ni and B.

Cr has functions of improving hardenability and solid solution strengthening, and can promote a bainitic transformation and improve a strength of bainite. In addition, Cr is not easy to form segregation, so Cr can be partially used to replace Mn. Mo has a significant effect of improving hardenability and is crucial to ensuring a cooling effect of thick steel plates. However, Mo is very expensive and an upper limit of a content of Mo needs to be controlled. Cu and Ni have an effect of improving a corrosion resistance of the high-strength steel, but Cu and Ni both are more expensive alloy elements. Therefore, amounts of Cu and Ni added also need to be controlled. B has an effect of significantly improving hardenability. When compositions of a thicker hot-rolled substrate are designed, a small amount of B can be appropriately added to improve the hardenability of the steel plate to promote a formation of bainite structure. The above elements all have advantageous effects on a certain aspect of a performance of the high-strength steel according to an embodiment of the invention, so at least one of them is selected to be added.

In some embodiments, in the chemical compositions of the high-strength steel, a content of Cr is ≤ 0.1 wt%, a content of Mo is ≤ 0.1 wt%, a content of Cu is ≤ 0.05 wt%, a content of Ni is ≤ 0.05 wt%, and a content of B is ≤ 0.001 wt%.

Any one or more chemical elements of Cr, Mo, Cu, Ni and B may be adaptively added to the chemical composition of the high-strength steel, but of course, the above elements may not be added.

In some embodiments, the chemical compositions of the high-strength steel further includes at least one of the following: Nb, Ti, and V.

In some embodiments, in the chemical compositions of the high-strength steel, a content of Nb is ≤0.05 wt%, a content of Ti is ≤0.15 wt%, and a content of V is ≤0.2 wt%.

As a preference, any one or more chemical elements of Nb, Ti and V can be adaptively added into the chemical compositions of the high-strength steel, and of course, the above elements can also be omitted; Nb has an effect of inhibiting a recrystallization of austenite and refining original austenite grains during hot rolling, thereby refining the ferrite and bainite formed after an austenitic transformation. It is advantageous for improving a strength and plasticity. During slab heating and rolling, TiC can also play a role in refining grains and regulating a uniformity of structure. In addition, carbides of Nb, V and Ti are further precipitated out during subsequent annealing, to be capable of strengthening the ferrite matrix, so as to be conducive for reducing the hardness difference between the ferrite and bainite, and improving the hole expansion performance. In order to obtain the above effects, at least one of Nb, V and Ti is selected to be added according to a preferred embodiment of the invention. However, when a content of Nb exceeds 0.05%, it is easy to cause a hot-rolled structure to be strip-shaped, which is not conducive to a local formability. When a content of Ti exceeds 0.15% or a content of V exceeds 0.2%, an effect of strengthening is saturated and a cost is likely to increase.

In some embodiments, the microstructure of the high-strength steel further includes at least one of the following: a tempered martensite, a retained austenite, a cementite, and a microalloy carbide.

The cementite is a metallic compound formed by iron and carbon. A chemical formula of the cementite is Fe₃C. The microalloy carbides generally refer to NaCl-type carbides such as NbC, TiC, VC, NbC, TiC, etc., formed by microalloy elements and carbon elements.

In some embodiments, property parameters of the high-strength steel meet at least one of the following: I. a tensile strength ≥780 MPa, II. an elongation after fracture at a gauge length of 50 mm ≥23%, III. a hole expansion rate ≥65%.

The tensile strength of the high-strength steel is ≥780MPa; the elongation after fracture at a 50mm gauge length of the high-strength steel is ≥23%; the hole expansion rate of the high-strength steel is ≥65%. Thus, the high-strength steel has both high tensile strength and high hole expansion performance, that is, a tensile strength of a steel plate is greatly improved while a good local formability is ensured. Under the premise of ensuring a strength and safety performance of an automobile, a curb weight of the automobile can be reduced as much as possible, thereby improving a power performance of the automobile, reducing fuel consumption, and reducing exhaust pollution. Thus, a lightweight effect of high-strength steel can be significantly improved.

In the second aspect, as shown in FIG. 2, a method for preparing a high-strength steel is provided according to an embodiment of the invention. The method is used to prepare the high-strength steel of the first aspect. The method for preparing the high-strength steel includes: S1, heating a slab containing the chemical compositions; S2, hot rolling the slab heated, and then cooling and coiling the slab to obtain a hot-rolled coil; and S3, performing a second cooling and then a pickling on the hot-rolled coil to obtain a high-strength steel.

This method does not require any additional specific apparatuses, is easy to operate, and is applicable to large-scale quantitative production. Optionally, a specific process of obtaining a slab with the same chemical compositions as the high-strength steel in the first aspect includes: performing, according to the existing steelmaking process, a smelting, converter, refining, continuous casting, and other processes on a molten steel with the same chemical compositions as the high-strength steel according to the first aspect to obtain the slab. It will not be repeated herein.

In some embodiments, the hot rolling includes a rough rolling and a finish rolling. Process parameters of the rough rolling satisfy at least one of the following: I. a starting rolling temperature ranges from 1120°C to 1180°C, II. an ending temperature ranges from 1080°C to 1130°C.

In some embodiments, process parameters of the finish rolling satisfy at least one of the following: I. a starting rolling temperature ranges from 1010°C to 1050°C, II. a final rolling temperature ranges from 880°C to 920°C.

The starting rolling temperature of the rough rolling ranges from 1120°C to 1180°C. When the starting rolling temperature of the rough rolling is higher than 1180°C, austenite grains are easily caused to be coarse. When the starting rolling temperature of the rough rolling is lower than 1120°C, a rolling deformation resistance is easily caused to be increased and a difficulty of temperature control in a finishing rolling stage is easily caused to be increased. The starting rolling temperature of the finish rolling ranges from 1010°C to 1050°C. When the starting rolling temperature of the finish rolling is higher than 1050°C, the final rolling temperature will increase accordingly, which may easily lead to coarse grains. When the starting rolling temperature of the finish rolling is lower than 1010°C, a descaling effect in the finishing rolling stage may not be good, which may easily lead to a formation of an iron oxide scale on a surface of the hot-rolled coil. The final rolling temperature of the finish rolling ranges from 880°C to 920°C. When the final rolling temperature of the finish rolling is lower than 880°C, it is easy to enter a non-recrystallization zone, causing a structure to be elongated along a rolling direction. An uneven structure will cause an anisotropy of properties of dual-phase steel and deteriorate the hole expansion performance. When the final rolling temperature of the finish rolling is greater than 920°C, grains of a hot-rolled structure are relatively coarse, and thus it is easy to lead to insufficient tensile strength. In some embodiments, the starting rolling temperature of the rough rolling may be 1120°C, 1121°C, 1122°C, 1123°C, 1124°C, 1125°C, 1126°C, 1127°C, 1128°C, 1129°C, 1130°C, 1130°C, 1130°C, 1130°C, 1131°C, 1132°C, 1133°C, 1134°C, 1135°C, 1136°C, 1137°C, 1138°C, 11 39°C, 1140°C, 1141°C, 1142°C, 1143°C, 1144°C, 1145°C, 1146°C, 1147°C, 1148°C, 1149°C, 1150°C, 1152°C, 1155°C, 1158°C, 1160°C, 1162°C, 1165°C, 1168°C, 1170°C, 1172°C, 1175°C, 1178°C, 1180°C, etc.. The ending temperature of the rough rolling may be 1080°C, 1085°C, 1090°C, 1095°C, 1110°C, 1111°C, 1112°C, 1113°C, 1114°C, 1115°C, 1116°C, 1117°C, 1118°C, 1119°C, 1120°C, 1121°C, 1122°C, 1123°C, 1124°C, 1125°C, 1126°C, 1127°C, 1128°C, 1130°C, etc.. The starting rolling temperature of the finish rolling may be 1010°C, 1012°C, 1015°C, 1018°C, 1020°C, 1022°C, 1024°C, 1028°C, 1030°C, 1033°C, 1035°C, 1038°C, 1040°C, 1041°C, 1042°C, 1043°C, 1044°C, 1045°C, 1046°C, 1047°C, 1048°C, 1049°C, 1050°C, etc.. The final rolling temperature of the finish rolling may be 880°C, 880°C, 882°C, 885°C, 888°C, 890°C, 895°C, 898°C, 900°C, 905°C, 908°C, 912°C, 915°C, 920°C, etc..

In some embodiments,the hot rolling the slab heated, and then cooling and coiling the slab to obtain a hot-rolled coil, includes: S21, hot rolling the slab heated to obtain a hot-rolled plate; S22, performing a first water cooling on the hot-rolled plate under a condition of a first set cooling rate to make the hot-rolled plate to have a first set temperature; S23, air cooling the hot-rolled plate with the first set temperature, under conditions of a first set temperature and a first set time; S24, performing a second water cooling under a condition of a second set cooling rate, on the hot-rolled plate after being air cooled, to make the hot-rolled plate to have a second set temperature; S25, coiling the hot-rolled plate with the second set temperature under a condition of a coiling temperature to obtain a hot-rolled coil.

In some embodiments, process parameters involved in the method satisfy at least one of the following: I. the first set cooling rate is ≥ 30°C/s, II. the first set temperature ranges from 620°C to 670°C, III. the first set time ranges from 5s to 8s, IV. the second set cooling rate is ≥ 20°C/s, V. the second set temperature ranges from 430°C to 480°C, VI. the coiling temperature ranges from 430°C to 480°C.

A purpose of the first setting cooling rate being ≥ 30°C/s is to make a steel plate after being hot rolled quickly to enter a ferrite transformation zone. When the first setting cooling rate is less than 30°C/s, a hot-rolled structure tends to grow big. The first set temperature ranges from 620°C to 670°C. For an alloy composition of the high-strength steel according to an embodiment of the invention, 620°C to 670°C is a suitable temperature range for a formation of ferrite. When a temperature is lower than 620°C, a phase transformation is easy to enter a pearlite zone. When the temperature is higher than 670°C, the ferrite is formed slowly and is easy to grow big. The first set time ranges from 5s to 8s. When the first set time is less than 5s, a proportion of the ferrite is insufficient. When the first set time exceeds 8s, the proportion of the ferrite is too high. The second set cooling rate ≥ 20°C/s aims to avoid a pearlite transformation zone and make a phase transformation to quickly enter a bainite transformation zone. The first set temperature may be 620°C, 624°C, 627°C, 630°C, 633°C, 635°C, 639°C, 640°C, 641°C, 645°C, 650°C, 652°C, 652°C, 654°C, 656°C, 658°C, 660°C, 662°C, 665°C, 666°C, 668°C, 670°C, etc.; the second set temperature may be 430°C, 433°C, 435°C, 438°C, 440°C, 444°C, 445°C, 448°C, 450°C, 452°C, 455°C, 458°C, 460°C, 462°C, 465°C, 466°C, 468°C, 470°C, 472°C, 475°C, 480°C, etc.. When the coiling temperature is higher than 480°C, the microalloy carbides are precipitated out in large quantities during a hot rolling stage. During a subsequent annealing and soaking, carbides grow big and coarsen, and thus a strengthening effect is significantly weakened, thereby easily leading to insufficient tensile strength. When the coiling temperature is lower than 430°C, although a large amount of microalloys can be solid dissolved in a matrix to promote precipitation in a subsequent annealing stage, it also causes an increase in a proportion of hard phase martensite. The hard phase martensite decomposes in an annealing stage to form a cementite, deteriorating the elongation performance and the local formability. In some embodiments, the coiling temperature may be 430°C, 433°C, 435°C, 438°C, 440°C, 444°C, 445°C, 448°C, 450°C, 452°C, 455°C, 458°C, 460°C, 462°C, 465°C, 466°C, 468°C, 470°C, 472°C, 475°C, 480°C, etc..

In some embodiments, the performing the second cooling and then the pickling on the hot-rolled coil to obtain the high-strength steel, includes: S31, cooling the hot-rolled coil, wherein before a temperature of the hot-rolled coil drops to 250°C, a cooling rate of the cooling is controlled to be ≤10°C/h; and S32, pickling the hot-rolled coil after cooled to obtain a high-strength steel.

During the hot-rolled coil after coiled, is slowly cooled in a slow cooling pit, and a temperature is controlled to be 250°C, a cooling rate (cooling speed) is controlled to be ≤10°C/h. A purpose is to reduce a temperature difference between an outer ring and an inner ring of the hot-rolled coil, and a temperature difference between an edge and a middle portion of the hot-rolled coil, to improve a uniformity of organization and performance, such that a difference of a hole expansion rate throughout coil of a steel plate after galvanized and a difference of a hole expansion rate throughout coil of the steel plate before galvanized can be less than 5%. In some embodiments, the cooling rate may be 10°C/h, 9°C/h, 8°C/h, 7°C/h, 6°C/h, 5°C/h, 4°C/h, 3°C/h, 2°C/h, 1°C/h, etc..

In some embodiments, process parameters of the pickling satisfy at least one of the following: I. a scale-breaking elongation rate ranges from 0.4% to 0.8%, II. a tension leveling elongation rate ranges from 0.1% to 0.3%, III. a temper rolling force ranges from 2000 kN to 2500 kN.

The scale-breaking elongation rate ranging from 0.4% to 0.8% is conducive to obtaining a good surface quality and plate shape. When the scale-breaking elongation rate is lower than 0.4%, a scaly iron oxide scale on a surface of a steel plate cannot be effectively eliminated, affecting an effect of subsequent galvanizing. When the scale-breaking elongation rate is higher than 0.8%, wave defects are prone to occur on the steel plate. The purpose of setting the tension leveling elongation rate to range from 0.1% to 0.3% and the temper rolling force to range from 2000 kN to 2500 kN is to obtain a good plate shape of a pickled plate and avoid a strip deviation due to a poor plate shape during subsequent annealing. In some embodiments, the scale-breaking elongation rate may be 0.4%, 0.5%, 0.6%, 0.7%, 0.8%, etc.; the tension leveling elongation rate may be 0.1%, 0.2%, 0.3%, etc.; and the temper rolling force may be 2050 kN, 2100 kN, 2140 kN, 2180 kN, 2200 kN, 2250 kN, 2300 kN, 2350 kN, 2400 kN, 2450 kN, 2500 kN, etc..

In a third aspect, a zinc-aluminum-magnesium coated steel is provided according to an embodiment of the invention, including a steel matrix, and a zinc-aluminum-magnesium coating attached to at least a portion of a surface of the steel matrix. The steel matrix is the high-strength steel described in the first aspect.

At present, most of steels used for the automobile chassis is a pickled plate. After a component is formed and welded, a layer of primer is coated on a surface through the electrophoresis process to achieve a purpose of corrosion protection. With a diversification of a service environment of automobiles, an electrophoretic paint film is often peeled off and scratched due to stone impact damage, causing the steel matrix of the pickled plate to directly contact an external corrosive environment, and thus the steel matrix of the pickled plate is prone to be rusted, thereby leading to a safety hazard. A replacement and reproduction of a rusted component will also increase carbon emissions and secondary costs. Therefore, on the one hand, the existing pickled plates for automobile chassis have the above-mentioned problem of poor lightweight effect; on the other hand, there is also a problem of insufficient corrosion resistance. The zinc-aluminum-magnesium coated steel adopts the high-strength steel of the first aspect as the steel matrix, and therefore has at least all the advantageous effects brought by the technical solution of the above-mentioned embodiments of the first aspect, such as good lightweight effect, etc., which will not be repeated here one by one. At the same time, a zinc-aluminum-magnesium coating coated on at least a portion of a surface of the steel matrix has excellent corrosion resistance, such that the zinc-aluminum-magnesium coated steel has characteristics of good lightweight effect and good corrosion resistance, and can effectively solve the technical problems of insufficient corrosion resistance of existing zinc-aluminum-magnesium coated steel leading to premature failure and poor lightweight effect.

In some embodiments, a thickness a of the steel matrix and a thickness b of the zinc-aluminum-magnesium coating satisfy a relationship: b/a ≥ 0.004.

A biggest advantage of the zinc-aluminum-magnesium coating, compared with pure zinc coating, is that hydroxide corrosion products formed on a surface of a steel plate in an early stage of corrosion can flow to an incision position of the steel plate, and clad the incision position, thereby preventing further corrosion. Thus, a good incision corrosion resistance can be achieved. The thicker a steel matrix is, the wider an incision is, and in turn a coating thickness needs to be increased accordingly to achieve a good cladding effect. The inventors of the present invention have conducted repeatedly experiments and found that when a ratio of the coating thickness to the thickness of the steel matrix is not less than four per thousand, corrosion products can protect the incision, and no red rust will appear at the incision position under 1000 h of neutral salt spray accelerated corrosion conditions.

In some embodiments, the thickness of the steel matrix ranges from 1.5 mm to 6.0 mm, and the thickness of the zinc-aluminum-magnesium coating ranges from 6 µm to 25 µm.

The thickness of the steel matrix may range from 1.5 mm to 6.0 mm. In some embodiments, the thickness of the steel matrix may be 1.5 mm, 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, 4.1 mm, 4.2 mm, 4.3 mm, 4.4 mm, 4.5 mm, 4.6 mm, 4.7 mm, 4.8 mm, 4.9 mm, 5.0 mm, 5.1 mm, 5.2 mm, 5.3 mm, 5.4 mm, 5.5 mm, 5.6 mm, 5.7 mm, 5.8 mm, 5.9 mm, 6.0 mm, etc.. The thickness of the zinc-aluminum-magnesium coating may range from 6 µm to 25 µm. In some embodiments, the thickness of the zinc-aluminum-magnesium coating may be 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, etc..

In some embodiments, chemical compositions of the zinc-aluminum-magnesium coating includes: Al: 3 wt% to 11 wt%, Mg: 1 wt% to 4 wt%, Si: 0 to 0.3 wt%, and Zn.

In some embodiments, when the thickness of the steel matrix is greater than or equal to 1.5 mm and less than or equal to 4.5 mm, the chemical compositions of the zinc-aluminum-magnesium coating includes: Al: 3 wt% to 8 wt%, Mg: 1 wt% to 3 wt%, and Zn. When the thickness of the steel matrix is greater than 4.5 mm and less than or equal to 6.0 mm, the chemical compositions of the zinc-aluminum-magnesium coating includes: Al: 5 wt% to 11 wt%, Mg: 2 wt% to 4 wt%, Si: 0 to 0.3 wt%, and Zn.

The inventors have found that the corrosion resistance of the zinc-aluminum-magnesium coating improves with the increase of Al and Mg contents within a certain range, but when the content of Al exceeds 11% and the Mg content exceeds 4%, an improvement in corrosion resistance is no longer obvious. It is found in further research that when the thickness of the steel matrix is 1.5mm ≤ 4.5mm, a good incision corrosion resistance can be obtained by controlling compositions of the zinc-aluminum-magnesium coating to Al: 3% to 8% and Mg: 1% to 3%; when 4.5mm< the thickness of the steel matrix ≤6.0mm, the content of Al and content of Mg in the zinc-aluminum-magnesium coating need to be increased to Al: 5% to 11% and Mg: 2% to 4% to obtain the good incision corrosion resistance. In addition, in order to avoid excessive reaction of Fe and Al due to an increased content of Al, 0-0.3% Si can be added into a plating solution.

In a fourth aspect, a method for preparing a zinc-aluminum-magnesium coated steel is provided according to an embodiment of the invention, and is used to prepare the zinc-aluminum-magnesium coated steel of the third aspect. The method includes: S1', preheating the steel matrix to make the steel matrix have a third set temperature; S2', heating the steel matrix with the third set temperature under a condition of a set heating rate to make the steel matrix have a fourth set temperature, and performing a soaking heat preservation on the steel matrix under conditions of the fourth set temperature and a second set time; S3', cooling the steel matrix after the soaking heat preservation under a condition of a third set cooling rate to make the steel matrix have a fifth set temperature; S4', performing a hot-dip on the steel matrix with the fifth set temperature using a zinc-magnesium-aluminum plating solution, and then cooling the steel matrix to obtain the zinc-aluminum-magnesium coated steel.

This method does not require any additional specific apparatuses, is easy to operate, and is applicable to large-scale quantitative production. A specific process of obtaining the steel matrix can be performed by referring to the method for preparing the high-strength steel in the second aspect, and will not be repeated in the invention.

In some embodiments, process parameters involved in the method satisfy at least one of the following: I. the third set temperature ranges from 220°C to 240°C, II. the set heating rate ranges from 8°C/s to 30°C/s, III. the fourth set temperature ranges from 620°C to 720°C, IV. the second set time ranges from 30 s to 150 s, V. the third set cooling rate ranges from 5°C/s to 20°C/s, VI. the fifth set temperature ranges from 430°C to 470°C.

The fourth set temperature ranges from 620°C to 720°C, which can ensure that a steel plate have better microstructure and mechanical properties. When the fourth set temperature is lower than 620°C, Nb and Ti are prone to insufficient precipitation during annealing, which is not conducive to improving a yield strength. **In** addition, a redox effect of a surface of the steel plate is not good in low temperature state, and thus surface defects such as a skip-plating and zinc flow marks are prone to occur; when the fourth set temperature is higher than 720°C, the bainite or martensite is prone to decomposition to form the cementite, resulting in insufficient tensile strength and a decreased local formability of a steel.

The second set time ranges from 30s to 150s. When the second set time is less than 30s, micro-alloy elements such as Nb, V, and Ti are prone to insufficient precipitation. When the second set time is more than 150s, the bainite, martensite, etc. are severely tempered to be easily decomposed to form the carbides, resulting in that the tensile strength and formability of the steel plate cannot be guaranteed. The fifth set temperature ranges from 430°C to 470°C. Within this temperature range, a bonding between a surface of the steel matrix and the plating solution is relatively good. When it is lower or higher than this temperature range, it is easy to cause surface defects such as the zinc flow marks and a dezincification.

In a fifth aspect, an automobile part is provided according to an embodiment of the invention. At least some structural members in the automobile part are made of the zinc-aluminum-magnesium coated steel according to the third aspect.

There are two specific ways to apply the zinc-aluminum-magnesium coated steel to a preparation of automobile parts. In a first way, a surface electrophoresis treatment is performed on the high-strength steel of the first aspect after stamped and/or the zinc-aluminum-magnesium coated steel of the third aspect after stamped. The first way can replace the existing processes of "pickling plate forming + electrophoresis", "pickling plate forming + hot-dip galvanizing/electrogalvanizing + electrophoresis" and "hot-rolled galvanized plate forming + electrophoresis". The first way can significantly improve a corrosion resistance of component and extend a service life of component. In a second way, a surface electrophoresis treatment is not performed on the high-strength steel of the first aspect after stamped and/or the zinc-aluminum-magnesium coated steel of the third aspect after stamped. The second way can replace the existing processes of "pickling plate forming + electrophoresis", "pickling plate forming + hot-dip galvanizing/electrogalvanizing + electrophoresis" and "hot-rolled galvanized plate forming + electrophoresis". This electrophoresis-free process can significantly reduce production costs, reduce carbon emissions, and has a green and low-carbon effect. Steel bodies of the components are usually welded or the components are usually welded. Welds need to be coated with a medium. The medium includes at least one of zinc powder, aluminum-zinc powder and zinc-aluminum-magnesium powder. Arc welding is mostly used for welding the high-strength steel. A coating at a weld is damaged under high temperature and loses protective ability. A re-coating, performed on the weld with zinc powder, aluminum-zinc powder, or zinc-aluminum-magnesium powder, can provide secondary protection for the weld and eliminate weak areas of corrosion. The re-coating can be performed online or offline.

An automobile part is provided according to an embodiment of the disclosure. Since at least some structural members in the automobile part are made of the high-strength steel of the first aspect and/or the zinc-aluminum-magnesium coated steel of the third aspect, at least all the advantageous effects brought by the technical solutions of the above-mentioned embodiments can be achieved, which are not described one by one here.

In some embodiments, the structural members includes at least one of the following: a control arm, a clutch, a transmission, a main reducer, a half shaft, a universal joint, a drive shaft, a frame, a balance bar, an axle, a wheel, a beam, a shock absorber, a steering knuckle and a support arm.

The invention is further described below in conjunction with embodiments. It should be understood that these embodiments are only used to illustrate the invention but are not used to limit the scope of the invention. The experimental methods without specific conditions in the following examples are usually measured in accordance with national standards in China. If there is no corresponding national standards in China, the experimental methods without specific conditions in the following examples are proceeded according to the general international standards, conventional conditions, or the conditions recommended by the manufacturer.

In Examples 1-15, the zinc-aluminum-magnesium coated steels in different implementation conditions of the invention are prepared. In comparative examples 1-8, galvanized steels are prepared. Specific preparation process of each example includes step (1) - step (4).

In Step (1), chemical compositions of slabs of Examples 1-15 and Comparative Examples 1-8 are shown in Table 1.

In Step (2), the slabs in step (1) are heated, and then hot rolled, cooled and coiled in sequence. In a hot rolling, a starting rolling temperature of a rough rolling ranges from 1120°C to 1180°C, and an ending temperature of the rough rolling ranges from 1080°C to 1130°C. A starting rolling temperature of a finish rolling ranges from 1010°C to 1050°C, and a final rolling temperature of the finish rolling ranges from 880°C to 920°C. A laminar cooling is adopted for cooling. A cooling rate of a first stage is ≥30°C/s. A cooling ending temperature of the first stage ranges from 620°C to 670°C. An air cooling time is 5s to 8s. A cooling rate of a second stage is ≥20°C/s, and a cooling ending temperature of the second stage is 430°C to 480°C. A coiling temperature ranges from 430°C to 480°C. The hot-rolled coil after coiled is placed in a slow cooling pit for slow cooling, where a temperature is in a range from the coiling temperature to 250°, a cooling rate is ≤10°C/h.

In Step (3), a pickling is performed on the hot-rolled coil cooled in step (2) to remove an iron oxide scale to obtain a high-strength steel (steel matrix) of 1.5 mm to 6.0 mm. In some embodiments, in the pickling, a scale-breaking elongation rate ranges from 0.4% to 0.8%, a tension leveling elongation rate ranges from 0.1% to 0.3%, and a temper rolling force ranges from 2000kN to 2500kN. Specific process parameters of each Example and Comparative Example are shown in Table 2.

In Step(4), a continuous hot-dip with zinc-magnesium-aluminum plating solution, on a continuous hot-dip galvanizing production line, is performed on the high-strength steel (steel matrix) in step (3), and then the high-strength steel is cooled to room temperature to obtain the high-strength steel with the zinc-aluminum-magnesium coating for a green and low-carbon automobile chassis with a long service life. In some embodiments, a preheating temperature ranges from 220°C to 240°C; a heating rate ranges from 8°C/s to 30°C/s; a soaking temperature ranges from 620°C to 720°C; a soaking time ranges from 30s to 150s; a cooling rate ranges from5°C/s to 20°C/; a galvanizing temperature ranges from 430°C to 470°C; a coating composition includes: Al: 5% to 11%, Mg: 2% to 4%, Si: 0 to 0.3%, the rest being Zn and unavoidable impurities; and a coating thickness ranges from 6 µm to 25 µm. Process parameters of continuous hot-dip with zinc-magnesium-aluminum plating solution of each Example and Comparative Example are shown in Table 3.

**Table 1 Chemical compositions and contents (wt%) of the slabs in Examples 1-15 and Comparative Examples 1-8**

| Serial number | C | Si | Mn | P | S | Al | Cr | Mo | Cu | Ni | B | Nb | Ti | V |
|---|---|---|---|---|---|---|---|---|---|---|---|---|---|---|
| Example 1 | 0.04 | 0.1 | 1.9 | 0.009 | 0.0006 | 0.01 | 0.1 | | | | | | 0.11 | |
| Example 2 | 0.05 | 0.08 | 1.8 | 0.007 | 0.0007 | 0.04 | | 0.1 | | | | | 0.12 | |
| Example 3 | 0.06 | 0.08 | 1.8 | 0.01 | 0.0006 | 0.08 | | | 0.05 | | | 0.01 | 0.10 | |
| Example 4 | 0.07 | 0.07 | 1.7 | 0.008 | 0.001 | 0.12 | | | | 0.05 | | 0.02 | 0.10 | |
| Example 5 | 0.08 | 0.09 | 1.8 | 0.007 | 0.0007 | 0.15 | | | | | 0.001 | | 0.15 | |
| Example 6 | 0.09 | 0.06 | 1.7 | 0.006 | 0.0005 | 0.20 | | 0.1 | | | | | 0.08 | 0.08 |
| Example 7 | 0.10 | 0.05 | 1.6 | 0.008 | 0.0007 | 0.25 | 0.1 | 0.1 | | | | 0.03 | 0.09 | |
| Example 8 | 0.11 | 0.08 | 1.7 | 0.007 | 0.0008 | 0.30 | 0.05 | 0.05 | | | | 0.04 | 0.08 | 0.05 |
| Example 9 | 0.12 | 0.1 | 1.5 | 0.009 | 0.0007 | 0.15 | | 0.1 | | | 0.001 | | 0.06 | 0.15 |
| Example 10 | 0.13 | 0.08 | 1.6 | 0.008 | 0.0005 | 0.35 | | | 0.05 | 0.05 | | 0.05 | | 0.1 |
| Example 11 | 0.14 | 0.09 | 1.8 | 0.006 | 0.0008 | 0.40 | | | | | | 0.02 | | 0.2 |
| Example 12 | 0.15 | 0.1 | 1.2 | 0.007 | 0.0007 | 0.05 | 0.1 | 0.1 | | | 0.0005 | 0.03 | 0.08 | |
| Example 13 | 0.13 | 0.07 | 1.8 | 0.006 | 0.0005 | 0.60 | | 0.05 | | | | | 0.14 | |
| Example 14 | 0.09 | 0.08 | 1.7 | 0.008 | 0.0006 | 0.45 | | | | | | 0.03 | 0.08 | |
| Example 15 | 0.08 | 0.1 | 1.6 | 0.007 | 0.0006 | 0.05 | 0.05 | | | | | | 0.11 | |
| Comparative Example 1 | 0.02 | 0.08 | 1.8 | 0.008 | 0.0005 | 0.50 | 0.05 | 0.1 | | | | | 0.12 | |
| Comparative Example 2 | 0.09 | 0.06 | 2.5 | 0.007 | 0.0006 | 0.05 | | | | | 0.001 | 0.02 | 0.08 | |
| Comparative Example 3 | 0.07 | 0.08 | 1.7 | 0.008 | 0.0008 | 0.15 | | 0.05 | | | | | 0.11 | |
| Comparative Example 4 | 0.06 | 0.1 | 1.8 | 0.009 | 0.0007 | 0.05 | 0.05 | | | | | 0.02 | | 0.14 |
| Comparative Example 5 | 0.07 | 0.07 | 1.6 | 0.01 | 0.0006 | 0.03 | | 0.08 | | | | | 0.07 | 0.09 |
| Comparative Example 6 | 0.10 | 0.08 | 1.8 | 0.009 | 0.0007 | 0.10 | | | 0.05 | 0.05 | | | 0.09 | 0.05 |
| Comparative Example 7 | 0.08 | 0.07 | 1.5 | 0.008 | 0.0005 | 0.06 | | 0.1 | | | | | 0.13 | |
| Comparative Example 8 | 0.12 | 0.06 | 1.7 | 0.009 | 0.0007 | 0.05 | 0.05 | 0.05 | | | | 0.03 | 0.11 | |

**Table 2 Key process parameters of hot rolling, cooling and pickling in Examples 1-15 and Comparative Examples 1-8**

| Serial number | Startin g rolling temper ature of rough rolling( °C) | Startin g rolling temper ature of finish rolling (°C) | Final rolling temper ature (°C) | Water coolin g rate of first stage( °C/s) | Water cooling ending temper ature of first stage (°C) | Air cool ing tie (s) | Wat er cool ing rate of seco nd stag e (°C/ s) | Coiling temperatu re(°C) | Scale-bre aking elongatio n rate (%) | Tensio n leveli ng elonga tion rate (%) | Temp er rollin g force( kN) | Thick ness of high streng th steel (mm) |
|---|---|---|---|---|---|---|---|---|---|---|---|---|
| Example 1 | 1180 | 1040 | 920 | 40 | 670 | 8 | 28 | 480 | 0.8 | 0.2 | 2100 | 2.5 |
| Example 2 | 1175 | 1045 | 910 | 45 | 650 | 6 | 29 | 460 | 0.6 | 0.1 | 2100 | 2.0 |
| Example 3 | 1150 | 1030 | 910 | 38 | 660 | 6 | 26 | 470 | 0.5 | 0.2 | 2200 | 3.0 |
| Example 4 | 1160 | 1035 | 880 | 35 | 630 | 7 | 24 | 450 | 0.7 | 0.1 | 2000 | 1.5 |
| Example 5 | 1170 | 1050 | 900 | 37 | 655 | 6 | 25 | 460 | 0.5 | 0.2 | 2200 | 3.5 |
| Example 6 | 1140 | 1025 | 890 | 40 | 660 | 6 | 23 | 470 | 0.5 | 0.2 | 2300 | 4.0 |
| Example 7 | 1135 | 1020 | 905 | 35 | 650 | 8 | 30 | 470 | 0.5 | 0.2 | 2200 | 3.5 |
| Example 8 | 1130 | 1030 | 900 | 48 | 640 | 7 | 27 | 440 | 0.6 | 0.1 | 2100 | 2.0 |
| Example 9 | 1120 | 1010 | 890 | 42 | 650 | 6 | 26 | 450 | 0.8 | 0.2 | 2100 | 2.5 |
| Example 10 | 1145 | 1035 | 895 | 34 | 665 | 5 | 23 | 460 | 0.6 | 0.2 | 2400 | 4.5 |
| Example 11 | 1150 | 1045 | 915 | 35 | 645 | 7 | 22 | 480 | 0.5 | 0.2 | 2400 | 5.0 |
| Example 12 | 1165 | 1030 | 910 | 33 | 660 | 5 | 25 | 470 | 0.4 | 0.3 | 2500 | 5.5 |
| Example 13 | 1145 | 1025 | 920 | 35 | 650 | 6 | 27 | 440 | 0.4 | 0.3 | 2500 | 6.0 |
| Example 14 | 1150 | 1040 | 885 | 45 | 620 | 8 | 30 | 430 | 0.8 | 0.2 | 2100 | 2.5 |
| Example 15 | 1170 | 1030 | 890 | 35 | 650 | 6 | 28 | 440 | 0.5 | 0.2 | 2200 | 3.0 |
| Compar ative Example 1 | 1135 | 1020 | 905 | 35 | 650 | 8 | 30 | 470 | 0.5 | 0.2 | 2200 | 3.5 |
| Compar ative Example 2 | 1130 | 1030 | 900 | 48 | 640 | 7 | 27 | 440 | 0.6 | 0.1 | 2100 | 2.0 |
| Compar ative Example 3 | 1155 | 1040 | 850 | 44 | 650 | 6 | 26 | 460 | 0.6 | 0.1 | 2100 | 2.0 |
| Compar ative Example 4 | 1140 | 1025 | 890 | 38 | 645 | 15 | 25 | 470 | 0.8 | 0.2 | 2100 | 2.5 |
| Compar ative Example 5 | 1160 | 1045 | 900 | 41 | 630 | 8 | 30 | 380 | 0.8 | 0.2 | 2100 | 2.5 |
| Compar ative Example 6 | 1170 | 1050 | 900 | 37 | 655 | 6 | 25 | 460 | 0.5 | 0.2 | 2200 | 3.5 |
| Compar ative Example 7 | 1140 | 1025 | 890 | 40 | 660 | 6 | 23 | 470 | 0.5 | 0.2 | 2300 | 4.0 |
| Compar ative Example 8 | 1150 | 1045 | 915 | 35 | 645 | 7 | 22 | 480 | 0.5 | 0.2 | 2400 | 5.0 |

**Table 3 Process parameters of a continuous hot-dip with zinc-magnesium-aluminum plating solution of each Example and Comparative Example**

| Serial number | Preheati ng tempera ture (°C) | Heati ng rate (°C/s ) | Soaking tempera ture (°C) | Soaki ng time( s) | Coolin g rate( °C/s) | Galvanizin g temperatur e(°C) | Cont ent of Al of coati ng (wt% ) | Cont ent of Mg of coati ng (wt% | cont ent of Si of coati ng (wt %) | Coatin g thickn ess (µm) | Coating thickness/high-s trength steel thickness (%o) |
|---|---|---|---|---|---|---|---|---|---|---|---|
| Example 1 | 220 | 23 | 680 | 36 | 15 | 440 | 5 | 2 | | 12 | 4.8 |
| Example 2 | 220 | 27 | 690 | 32 | 18 | 440 | 5 | 2 | | 10 | 5.0 |
| Example 3 | 230 | 18 | 690 | 45 | 12 | 440 | 5 | 2 | | 15 | 5.0 |
| Example 4 | 230 | 30 | 640 | 30 | 15 | 470 | 4 | 1.5 | | 6 | 4.0 |
| Example 5 | 240 | 19 | 670 | 42 | 12 | 450 | 6 | 2.5 | | 17 | 4.9 |
| Example 6 | 230 | 16 | 660 | 55 | 9 | 445 | 6 | 2.5 | | 18 | 4.5 |
| Example 7 | 230 | 19 | 700 | 46 | 12 | 455 | 6 | 2.5 | | 17 | 4.9 |
| Example 8 | 220 | 28 | 720 | 32 | 20 | 460 | 5 | 2 | | 12 | 6.0 |
| Example 9 | 220 | 27 | 710 | 40 | 14 | 450 | 5 | 2 | | 12 | 4.8 |
| Example 10 | 230 | 12 | 650 | 83 | 7 | 445 | 6 | 2.5 | | 22 | 4.9 |
| Example 11 | 230 | 10 | 640 | 105 | 6 | 440 | 7 | 3 | | 22 | 4.4 |
| Example 12 | 230 | 10 | 630 | 125 | 6 | 435 | 8 | 3 | | 25 | 4.5 |
| Example 13 | 230 | 8 | 620 | 150 | 5 | 430 | 10 | 3 | 0.1 | 25 | 4.2 |
| Example 14 | 220 | 25 | 670 | 47 | 12 | 450 | 5 | 2 | | 12 | 4.8 |
| Example 15 | 230 | 18 | 690 | 50 | 12 | 440 | 5 | 2 | | 15 | 5.0 |
| Compara tive Example 1 | 230 | 19 | 700 | 46 | 12 | 455 | 6 | 2.5 | | 20 | 5.7 |
| Compara tive Example 2 | 220 | 28 | 720 | 32 | 20 | 460 | 5 | 2 | | 10 | 5.0 |
| Compara tive Example 3 | 220 | 23 | 660 | 82 | 17 | 460 | 5 | 2 | | 10 | 5.0 |
| Compara tive Example 4 | 220 | 25 | 670 | 47 | 12 | 450 | 5 | 2 | | 12 | 4.8 |
| Compara tive Example 5 | 230 | 25 | 680 | 47 | 12 | 460 | 5 | 2 | | 12 | 4.8 |
| Compara tive Example 6 | 230 | 20 | 740 | 46 | 14 | 450 | 6 | 2.5 | | 16 | 4.6 |
| Compara tive Example 7 | 230 | 15 | 680 | 120 | 9 | 445 | 6 | 2.5 | | 10 | 2.5 |
| Compara tive Example 8 | 230 | 10 | 640 | 105 | 6 | 440 | 4 | 3 | | 23 | 4.6 |

The zinc-aluminum-magnesium coated steels prepared in the above Examples 1-15 and Comparative examples 1-8 are tested for performances. Methods and standards for testing are as follows:
organization testing: metallographic microscope, scanning electron microscope, electron backscatter diffraction (EBSD) and transmission electron microscope are used to determine proportions of various phases in the steel plate;
mechanical properties testing: ZWICK/Roell Z100 tensile testing machine is used to test the tensile strength and elongation after fracture; ZWICK BUP1000 forming testing machine is used to test the hole expansion rate; and
corrosion resistance testing: a 1000h neutral salt spray test is used to evaluate the corrosion resistance of a steel plate at the incision position, and a proportion of red rust at the incision position is calculated.

Microstructures and various properties of the zinc-aluminum-magnesium coated steels prepared in Examples 1-15 and Comparative Examples 1-8 are shown in Table 4.

**Table 4 Microstructures and various properties of the zinc-aluminum-magnesium coated steels prepared in Examples 1-15 and Comparative Examples 1-8**

| Serial number | Microstructures | | | | | | Related properties | | | | |
|---|---|---|---|---|---|---|---|---|---|---|---|
| | Ferrite( %) | Bainite (%) | Tempered martensit e(%) | Retained austenite (%) | Cemen tite (%) | Microal loy carbide s (%) | Tensile strength( MPa) | Elongat ion after fracture A50(% ) | Averag e hole expans ion rate (%) | Differe nce of hole expansi on rate through out coil (%) | Re d rus t rat io (% ) |
| Example 1 | 80 | 19 | 0 | 0 | 1 | trace | 785 | 25 | 78 | 3 | 0 |
| Example 2 | 70 | 27 | 0 | 0 | 3 | trace | 793 | 25 | 73 | 3 | 0 |
| Example 3 | 74 | 24 | 0 | 0 | 2 | trace | 788 | 24.5 | 69 | 2 | 0 |
| Example 4 | 58 | 36 | 6 | 0 | 0 | trace | 816 | 24 | 71 | 2 | 0 |
| Example 5 | 69 | 25 | 4 | 0 | 2 | trace | 805 | 24 | 68 | 4 | 0 |
| Example 6 | 67 | 27 | 5 | 0 | 1 | trace | 800 | 24.5 | 71 | 3 | 0 |
| Example 7 | 62 | 30 | 3 | 0 | 5 | trace | 810 | 24.4 | 67 | 4 | 0 |
| Example 8 | 60 | 24 | 8 | 0 | 8 | trace | 808 | 23.5 | 65 | 4 | 0 |
| Example 9 | 63 | 27 | 4 | 0 | 6 | Trace | 825 | 23 | 67 | 3 | 0 |
| Example 10 | 65 | 27 | 3 | 4 | 1 | trace | 827 | 24 | 69 | 4 | 0 |
| Example 11 | 57 | 35 | 0 | 8 | 0 | trace | 845 | 24.5 | 71 | 3 | 0 |
| Example 12 | 63 | 27 | 4 | 6 | 0 | trace | 795 | 25 | 68 | 4 | 0 |
| Example 13 | 60 | 30 | 6 | 4 | 0 | trace | 830 | 23.5 | 67 | 4 | 0 |
| Example 14 | 50 | 36 | 12 | 0 | 2 | trace | 822 | 23.5 | 66 | 4 | 0 |
| Example 15 | 61 | 29 | 5 | 0 | 5 | trace | 796 | 23 | 68 | 3 | 0 |
| Compara tive Example 1 | 76 | 18 | 0 | 0 | 6 | trace | 752 | 25 | 73 | 2 | 0 |
| Compara tive Example 2 | 64 | 17 | 9 | 0 | 10 | trace | 785 | 22 | 57 | 4 | 0 |
| Compara tive Example 3 | 60 | 35 | 5 | 0 | 0 | trace | 835 | 23.5 | 52 | 3 | 0 |
| Compara tive Example 4 | 86 | 12 | 0 | 2 | 0 | trace | 768 | 24.5 | 75 | 2 | 0 |
| Compara tive Example 5 | 57 | 16 | 18 | 0 | 9 | trace | 815 | 19.5 | 46 | 8 | 0 |
| Compara tive Example 6 | 90 | 0 | 0 | 0 | 10 | trace | 746 | 24.5 | 58 | 6 | 0 |
| Compara tive Example 7 | 63 | 34 | 0 | 0 | 3 | trace | 809 | 23 | 70 | 3 | 18 |
| Compara tive Example 8 | 65 | 35 | 0 | 0 | 0 | trace | 822 | 24 | 69 | 3 | 11 |

It can be seen from Tables 1-4 that in Examples 1-15, the zinc-aluminum-magnesium coated steel provided by the embodiments of the invention are used, and thus a corrosion resistance can be achieved and the service life can be increased. At the same time, a high tensile strength can be achieved and the lightweight effect can be improved. Therefore, a green and low-carbon can be achieved through a long service life and a lightweight. For Comparative Examples 1-8, chemical compositions or parameters of preparation process are different from those of the embodiments of the invention, and thus mechanical properties, formability or corrosion resistance of the obtained steel are significantly inferior to those of the embodiments of the invention.

The above descriptions are only specific embodiments of the invention, enabling those skilled in the art to understand or implement the invention. Various modifications to these embodiments will be readily apparent to those skilled in the art, and the generic principle defined herein may be practiced in other embodiments without departing from the spirit or scope of the invention. Therefore, the invention is not to be limited to the embodiments shown herein but is to be accorded the widest scope consistent with the principles and novel features claimed herein.

## Claims

1. A high-strength steel, chemical compositions of which comprise:
C, Si, Mn, Al and Fe, wherein,
a content of Si ranges from 0.05 wt% to 0.1 wt%, and a content of Al ranges from 0.01 wt% to 0.60 wt%;
a microstructure of the high-strength steel comprises at least one of the following: a ferrite of 50 area% to 80 area%, and a bainite of 10 area% to 50 area%.

2. The high-strength steel according to claim 1, wherein the chemical compositions of the high-strength steel further comprise at least one of the following: Cr, Mo, Cu, Ni, and B.

3. The high-strength steel according to claim 2, wherein, in the chemical compositions of the high-strength steel, a content of Cr is ≤0.1 wt%, a content of Mo is ≤0.1 wt%, a content of Cu is ≤0.05 wt%, a content of Ni is ≤0.05 wt%, and a content of B is ≤0.001 wt%.

4. The high-strength steel according to claim 1 or 2, wherein the chemical compositions of the high-strength steel further comprise at least one of the following: Nb, Ti, V.

5. The high-strength steel according to claim 4, wherein in the chemical compositions of the high-strength steel, a content of Nb is ≤0.05 wt%, a content of Ti is ≤0.15 wt%, and a content of V is ≤0.2 wt%.

6. The high-strength steel according to claim 1, wherein, the microstructure of the high-strength steel further comprises at least one of the following: a tempered martensite, a retained austenite, a cementite, and a microalloy carbide.

7. The high-strength steel according to claim 1, wherein in the chemical compositions of the high-strength steel, a content of C ranges from 0.04 wt% to 0.15 wt%, and a content of Mn ranges from 1.2 wt% to 1.9 wt%.

8. The high-strength steel according to any one of claims 1 to 3 or 6 to 7, wherein property parameters of the high-strength steel satisfy at least one of the following:
I. a tensile strength ≥780MPa,
II. an elongation after fracture of 50mm gauge length ≥23%, and
III. a hole expansion rate ≥ 65%.

9. A method for preparing a high-strength steel, for preparing the high-strength steel according to any one of claims 1 to 8, comprising:
heating a slab containing the chemical compositions;
hot rolling the slab heated, and then cooling and coiling the slab to obtain a hot-rolled coil;
performing a second cooling and then a pickling on the hot-rolled coil to obtain a high-strength steel.

10. The method for preparing the high-strength steel according to claim 9, wherein the hot rolling comprises a rough rolling and a finish rolling, wherein process parameters of the rough rolling satisfy at least one of the following:
I. a starting rolling temperature of the rough rolling ranges from 1120°C to 1180°C, and
II. an ending temperature ranges from 1080°C to 1130°C.

11. The method for preparing the high-strength steel according to claim 10, wherein process parameters of the finish rolling satisfy at least one of the following:
I. a starting rolling temperature of the finish rolling ranges from 1010°C to 1050°C, and
II. a final rolling temperature ranges from 880°C to 920°C.

12. The method for preparing the high-strength steel according to claim 9, wherein the hot rolling the slab heated, and then cooling and coiling the slab to obtain a hot-rolled coil, comprises:
hot rolling the slab heated to obtain a hot-rolled plate;
performing a first water cooling on the hot-rolled plate under a condition of a first set cooling rate to make the hot-rolled plate to have a first set temperature;
air cooling the hot-rolled plate with the first set temperature under conditions of a first set temperature and a first set time;
performing a second water cooling under a condition of a second set cooling rate, on the hot-rolled plate after being air cooled, to make the hot-rolled plate to have a second set temperature; and
coiling the hot-rolled plate with the second set temperature under a condition of a coiling temperature to obtain a hot-rolled coil.

13. The method for preparing the high-strength steel according to claim 9, wherein process parameters involved in the method satisfy at least one of the following:
I. the first set cooling rate is ≥30°C/s;
II. the first set temperature ranges from 620°C to 670°C;
III. the first set time ranges from 5s to 8s;
IV. the second set cooling rate is ≥20°C/s;
V. the second set temperature ranges from 430°C to 480°C; and
VI. the coiling temperature ranges from 430°C to 480°C.

14. The method for preparing the high-strength steel according to claim 9, wherein the performing the second cooling and then the pickling on the hot-rolled coil to obtain the high-strength steel, comprises:
cooling the hot-rolled coil, wherein before a temperature of the hot-rolled coil drops to 250°C, a cooling rate of the cooling is controlled to be ≤10°C/h; and
pickling the hot-rolled coil cooled to obtain a high-strength steel.

15. The method for preparing the high-strength steel according to claim 9, wherein process parameters of the pickling satisfy at least one of the following:
I. a scale-breaking elongation rate ranges from 0.4% to 0.8%;
II. a tension leveling elongation rate ranges from 0.1% to 0.3%; and
III. a temper rolling force ranges from 2000 kN to 2500 kN.

16. A zinc-aluminum-magnesium coated steel, comprising: a steel matrix, and a zinc-aluminum-magnesium coating attached to at least a portion of a surface of the steel matrix, wherein the steel matrix is the high-strength steel according to any one of claims 1 to 8.

17. The zinc-aluminum-magnesium coated steel according to claim 16, wherein a thickness a of the steel matrix and a thickness b of the zinc-aluminum-magnesium coating satisfy a relationship: b/a ≥ 0.004.

18. The zinc-aluminum-magnesium coated steel according to claim 16 or 17, wherein the thickness of the steel matrix ranges from 1.5 mm to 6.0 mm; and the thickness of the zinc-aluminum-magnesium coating ranges from 6 µm to 25 µm.

19. The zinc-aluminum-magnesium coated steel according to claim 16, wherein chemical compositions of the zinc-aluminum-magnesium coating comprise: Al: 3 wt% to 11 wt%, Mg: 1 wt% to 4 wt%, Si: 0 to 0.3 wt%, and Zn.

20. The zinc-aluminum-magnesium coated steel according to claim 16 or 19, wherein, when a thickness of the steel matrix is greater than or equal to 1.5 mm and less than or equal to 4.5 mm, chemical compositions of the zinc-aluminum-magnesium coating comprise: Al: 3 wt% to 8 wt%, Mg: 1 wt% to 3 wt%, and Zn; and
when the thickness of the steel matrix is greater than 4.5 mm and less than or equal to 6.0 mm, the chemical compositions of the zinc-aluminum-magnesium coating comprise: Al: 5 wt% to 11 wt%, Mg: 2 wt% to 4 wt%, Si: 0 to 0.3 wt%, and Zn.

21. A method for preparing a zinc-aluminum-magnesium coated steel, for preparing the zinc-aluminum-magnesium coated steel according to any one of claims 16 to 20, comprising:
preheating the steel matrix to make the steel matrix to have a third set temperature;
heating the steel matrix with the third set temperature under a condition of a set heating rate to make the steel matrix to have a fourth set temperature, and performing a soaking heat preservation on the steel matrix under conditions of the fourth set temperature and a second set time;
cooling the steel matrix after the soaking heat preservation under a condition of a third set cooling rate to make the steel matrix to have a fifth set temperature;
performing a hot-dip on the steel matrix with the fifth set temperature using a zinc-magnesium-aluminum plating solution, and then cooling the steel matrix to obtain a zinc-aluminum-magnesium coated steel.

22. The method for preparing the zinc-aluminum-magnesium coated steel according to claim 21, wherein process parameters involved in the method satisfy at least one of the following:
I. the third set temperature ranges from 220°C to 240°C;
II. the set heating rate ranges from 8°C/s to 30°C/s;
III. the fourth set temperature ranges from 620°C to 720°C;
IV. the second set time ranges from 30s to 150s;
V. the third set cooling rate ranges from 5°C/s to 20°C/s; and
VI. the fifth set temperature ranges from 430°C to 470°C.

23. An automobile part, wherein at least some structural members of which are made of the zinc-aluminum-magnesium coated steel according to any one of claims 16 to 20.

24. The automotive part according to claim 23, wherein the structural member comprises at least one of the following: a control arm, a clutch, a transmission, a main reducer, a half shaft, a universal joint, a drive shaft, a frame, a balance bar, an axle, a wheel, a beam, a shock absorber, a steering knuckle and a support arm.
